# DEMANDE DE BREVET EUROPEEN

(11) **EP 1 333 641 A1**
(43) Date de publication de la demande: **06.08.2003**
(21) Numéro de dépôt: 03100129.0
(22) Date de dépôt: 22.01.2003
(51) Int. Cl.: H04L 29/06

(54) **Procédé, système et dispositif pour sécuriser l'accès à un serveur**

(30) Priorité: 24.01.2002 FR 0200896
(71) Demandeur: Ercom Engineering Réseaux Communications, 78140 Vélizy-Villacoublay (FR)
(72) Inventeur: Morreeuw, Jean-François, 33000 Bordeaux (FR)
(74) Mandataire: Grynwald, Albert

(57) **Abrégé**

La présente invention concerne un procédé, un système et un dispositif pour sécuriser l'accès à un serveur (1) par un utilisateur (2).

L'utilisateur dispose d'un équipement informatique (3), mettant en oeuvre un logiciel client (4) local et/ou distant émettant des requêtes (10) vers le serveur (1), via un réseau de communication informatique (5) notamment du type web. Le logiciel client (4) comporte des éléments caractéristiques et des failles de sécurité.

L'invention est plus particulièrement destinée à :
- diminuer le risque d'intrusion de l'équipement informatique (3) par le serveur (1),
- protéger l'anonymat de l'utilisateur (2) et/ou de l'équipement informatique (3).

Le procédé comprend l'une au moins des étapes suivantes :
- masquer les éléments caractéristiques du logiciel client (4),
- confiner l'intégralité dudit logiciel client (4).

## Description

### Domaine concerné, problème posé

La présente invention concerne un procédé, un système et un dispositif pour sécuriser l'accès à un serveur par un utilisateur disposant d'un équipement informatique. Ce problème prend un relief particulier lorsque l'utilisateur met en oeuvre au moyen de son équipement informatique un logiciel client local et/ou distant, émettant des requêtes vers le serveur, via un réseau de communication informatique notamment du type web. En effet, les logiciels clients comportent des éléments caractéristiques et des failles de sécurité.

Par "logiciel client" au sens de la présente demande on désigne : un logiciel qui, de manière en soi connue et usuelle, adresse une requête à un serveur et recueille la réponse du serveur.

Par "éléments caractéristiques" ou "éléments identifiants" au sens de la présente demande on entend : les données usuellement transmises lors d'une requête permettant de distinguer l'utilisateur et/ou l'équipement informatique parmi l'ensemble des autres utilisateurs et/ou équipements informatiques.

Le procédé est plus particulièrement destiné à :
- diminuer le risque d'intrusion de l'équipement informatique par le serveur, dû aux failles de sécurité du logiciel client,
- protéger l'anonymat de l'utilisateur et/ou de l'équipeme informatique.

### Solution

### Procédé

Le procédé comprend l'une au moins des étapes suivantes :
- l'étape de masquer les éléments caractéristiques du logiciel client,
- l'étape de confiner l'intégralité du logiciel client.

De préférence, selon l'invention, pour confiner le logiciel client, le procédé comprend l'étape de confiner l'exécution du logiciel client dans un environnement virtuel.

De préférence, selon l'invention pour masquer les éléments caractéristiques du logiciel client, le procédé comprend en outre l'une au moins des étapes suivantes :
- l'étape d'ajouter et/ou de modifier et/ou de supprimer tout ou partie des éléments caractéristiques, et/ou
- l'étape de confiner l'exécution du logiciel client dans un environnement virtuel, et/ou
- l'étape de diffuser les requêtes en utilisant concurremment plusieurs fournisseurs d'accès et en répartissant les requêtes entre les fournisseurs d'accès.

Par fournisseur d'accès on entend un fournisseur permettant à l'équipement informatique d'un utilisateur d'être relié à un réseau de communication informatique.

De préférence, selon l'invention le procédé comprend en outre les étapes suivantes :
- l'étape de créer l'environnement virtuel au début de chaque session,
- l'étape de détruire l'environnement virtuel à la fin de chaque session.

Il résulte de la combinaison de ces traits techniques que l'environnement virtuel est éphémère.

Par "session" au sens de la présente demande, on entend une période de temps continue, définie à volonté par l'utilisateur et pendant laquelle il accède au réseau.

De préférence, selon l'invention, le procédé est tel que l'environnement virtuel est détruit à l'exception d'éléments prédéterminés par l'utilisateur. Il résulte de la combinaison de ces traits techniques que les éléments prédéterminés, notamment les requêtes favorites, persistent au cours des sessions successives.

De préférence, selon l'invention, le procédé est tel que le confinement dans l'environnement virtuel est délocalisé dans un dispositif spécifique autre que l'équipement informatique.

De préférence :
- pour ajouter et/ou modifier et/ou supprimer tout ou partie des éléments caractéristiques, et/ou
- pour diffuser les requêtes (i) en utilisant concurremment plusieurs fournisseurs d'accès et (ii) en répartissant les requêtes entre les fournisseurs d'accès,
le procédé selon l'invention comprend en outre, pour un administrateur, l'étape de paramétrer un logiciel mandataire spécialisé dans la gestion de l'anonymat. Ce logiciel mandataire est localisé dans le dispositif spécifique.

De préférence, selon l'invention le procédé est tel que l'administrateur paramètre le logiciel mandataire au moyen de règles. Les règles comportent des critères de sélection appartenant au groupe suivant :
- l'identifiant de l'utilisateur,
- le type du logiciel client,
- la requête,
- la date et l'heure,
- le contexte des requêtes précédentes au sein de ladite session.

Les règles comportent également des actions appartenant au groupe suivant :
- choisir le fournisseur d'accès via lequel la requête est routée, notamment en choisissant un fournisseur d'accès spécifique ou en choisissant les fournisseurs d'accès selon une politique tournante paramétrable,
- ajouter, modifier et/ou supprimer des éléments caractéristiques dans les requêtes, notamment en modifiant l'identifiant du logiciel client et les témoins.

Par témoins au sens de la description on entend des éléments plus couramment désignés par le nom de "cookies" dans le langage technique usuel.

De préférence, selon l'invention le procédé est tel que le logiciel mandataire vérifie l'accessibilité des fournisseurs d'accès et route exclusivement les requêtes via des fournisseurs d'accès accessibles.

De préférence, selon l'invention le procédé est tel que, dans le cas où l'exécution du logiciel client est confinée dans un environnement virtuel, localisé dans le dispositif spécifique, la communication entre l'équipement informatique et le dispositif spécifique est réalisée au moyen d'un protocole 6 assurant exclusivement une fonction de visualisation à distance. Il résulte de la combinaison des traits techniques que les risques d'intrusion dans l'équipement informatique sont réduits.

De préférence, selon l'invention, le procédé est tel que, dans le cas de requêtes impliquant un téléchargement de données dans un environnement virtuel, le rapatriement des données est effectué par l'envoi d'un message électronique entre le dispositif spécifique et l'utilisateur, via une passerelle de messagerie définie par l'administrateur.

De préférence, selon l'invention, le procédé est tel que, dans le cas de requêtes impliquant une impression dans un environnement virtuel, l'impression est réalisée sous la forme d'un fichier dans le dispositif spécifique. Le rapatriement du fichier est effectué par l'envoi d'un message électronique entre le dispositif spécifique et l'utilisateur, via une passerelle de messagerie définie par l'administrateur.

### Système

L'invention concerne également un système pour sécuriser l'accès à un serveur par un utilisateur disposant d'un équipement informatique. Le système met en oeuvre un logiciel client local et/ou distant, via un réseau de communication informatique notamment du type web. Le logiciel client comporte des éléments caractéristiques et des failles de sécurité et émet des requêtes vers le serveur. Le système est plus particulièrement destiné à :
- diminuer le risque d'intrusion de l'équipement informatique par le serveur, dû aux failles de sécurité du logiciel client,
- protéger l'anonymat de l'utilisateur et/ou de l'équipeme informatique.

Le système comprend :
- des moyens de masquage pour masquer les éléments caractéristiques du logiciel client,
- des moyens de confinement pour confiner l'intégralité du logiciel client.

De préférence, selon l'invention, pour confiner le logiciel client, le système comprend des moyens de confinement pour confiner l'exécution du logiciel client dans un environnement virtuel.

De préférence, selon l'invention, pour masquer les éléments caractéristiques du logiciel client, le système comprend :
- des moyens de calcul pour ajouter et/ou modifier et/ou supprimer tout ou partie des éléments caractéristiques, et/ou
- des moyens de confinement pour confiner l'exécution du logiciel client dans un environnement virtuel, et/ou
- des moyens de diffusion pour diffuser les requêtes (i) en utilisant concurremment plusieurs fournisseurs d'accès et (ii) en répartissant les requêtes entre les fournisseurs d'accès.

De préférence, selon l'invention, le système comprend en outre :
- des moyens d'installation pour créer l'environnement virtuel au début de chaque session,
- des moyens de remise à zéro pour détruire l'environnement virtuel à la fin de chaque session.

Il résulte de la combinaison de ces traits techniques que l'environnement virtuel est éphémère.

De préférence, selon l'invention, le système est tel que l'environnement virtuel est détruit à l'exception d'éléments prédéterminés par l'utilisateur. Il résulte de la combinaison de ces traits techniques que les éléments prédéterminés, notamment les requêtes favorites, persistent au cours des sessions successives.

De préférence, selon l'invention, le système est tel que les moyens de confinement dans l'environnement virtuel sont délocalisés dans un dispositif spécifique autre que l'équipement informatique.

De préférence :
- pour ajouter et/ou modifier et/ou supprimer tout ou partie des éléments caractéristiques, et/ou
- pour diffuser les requêtes (i) en utilisant concurremment plusieurs fournisseurs d'accès et (ii) en répartissant les requêtes entre les fournisseurs d'accès,
le système comprend en outre des moyens de paramétrage, mis en oeuvre par un administrateur, pour paramétrer un logiciel mandataire spécialisé dans la gestion de l'anonymat et localisé dans le dispositif spécifique.

De préférence, selon l'invention, le système est tel que le logiciel mandataire comprend des règles. Les règles comportent des critères de sélection appartenant au groupe suivant :
- l'identifiant de l'utilisateur,
- le type du logiciel client,
- la requête,
- la date et l'heure,
- le contexte des requêtes précédentes au sein de la session.

Les règles comportent également des actions appartenant au groupe suivant :
- choisir le fournisseur d'accès via lequel la requête est routée, notamment en choisissant un fournisseur d'accès spécifique ou en choisissant les fournisseurs d'accès selon une politique tournante paramétrable,
- ajouter, modifier et/ou supprimer des éléments caractéristiques dans les requêtes, notamment en modifiant l'identifiant du logiciel client, et les témoins.

De préférence, selon l'invention, le système est tel que le logiciel mandataire vérifie l'accessibilité des fournisseurs d'accès et route exclusivement les requêtes via des fournisseurs d'accès accessibles.

De préférence, selon l'invention, le système est tel que, dans le cas où l'exécution du logiciel client est confiné dans un environnement virtuel, localisé dans le dispositif spécifique, la communication entre l'équipement informatique et le dispositif spécifique est réalisée au moyen d'un protocole 6 assurant exclusivement une fonction de visualisation à distance. Il résulte de la combinaison de ces traits techniques que les risques d'intrusion dans l'équipement informatique sont réduits.

De préférence, selon l'invention, le système est tel que, dans le cas de requêtes impliquant un téléchargement de données dans un environnement virtuel, le dispositif spécifique comprend des moyens de messagerie électronique pour envoyer à l'utilisateur, via une passerelle de messagerie définie par l'administrateur, un message électronique de rapatriement des données.

De préférence, selon l'invention, le système est tel que, dans le cas de requêtes impliquant une impression dans un environnement virtuel, l'impression est réalisée sous la forme d'un fichier dans le dispositif spécifique. Le dispositif spécifique comprend des moyens de messagerie électronique pour envoyer à l'utilisateur, via une passerelle de messagerie définie par l'administrateur, un message électronique de rapatriement du fichier.

### Dispositif spécifique

L'invention concerne un dispositif spécifique pour sécuriser l'accès à un serveur par un utilisateur disposant d'un équipement informatique. Le dispositif spécifique est mis en oeuvre par un logiciel client situé dans le dispositif spécifique et/ou dans l'équipement informatique, via un réseau de communication informatique notamment du type web. Le logiciel client comporte des éléments caractéristiques et des failles de sécurité et émet des requêtes vers le serveur. Le dispositif spécifique est plus particulièrement destiné à :
- diminuer le risque d'intrusion de l'équipement informatique par le serveur, dû aux failles de sécurité du logiciel client,
- protéger l'anonymat de l'utilisateur et/ou de l'équipement informatique.

Le dispositif spécifique comprend :
- des moyens de masquage pour masquer les éléments caractéristiques du logiciel client,
- des moyens de confinement pour confiner l'intégralité du logiciel client.

De préférence, selon l'invention, le dispositif spécifique comprend des moyens de confinement pour confiner l'exécution du logiciel client dans un environnement virtuel.

De préférence, selon l'invention, le dispositif spécifique comprend, pour masquer les éléments caractéristiques du logiciel client :
- des moyens de calcul pour ajouter et/ou modifier et/ou supprimer tout ou partie des éléments caractéristiques, et/ou
- des moyens de confinement pour confiner l'exécution du logiciel client dans un environnement virtuel, et/ou
- des moyens de diffusion pour diffuser les requêtes en utilisant concurremment plusieurs fournisseurs d'accès et en répartissant les requêtes entre les fournisseurs d'accès.

De préférence, selon l'invention, le dispositif spécifique comprend en outre :
- des moyens d'installation pour créer l'environnement virtuel au début de chaque session,
- des moyens de remise à zéro pour détruire l'environnement virtuel à la fin de chaque session,

Il résulte de la combinaison de ces traits techniques que l'environnement virtuel est éphémère.

De préférence, selon l'invention, les moyens de remise à zéro sont tels que l'environnement virtuel est détruit à l'exception d'éléments prédéterminés par l'utilisateur. Il résulte de la combinaison de ces traits techniques que les éléments prédéterminés, notamment les requêtes favorites, persistent au cours des sessions successives.

De préférence :
- pour ajouter et/ou modifier et/ou supprimer tout ou partie des éléments caractéristiques, et/ou
- pour diffuser les requêtes en utilisant concurremment plusieurs fournisseurs d'accès et en répartissant les requêtes entre les fournisseurs d'accès,
   le dispositif spécifique comprend en outre un logiciel mandataire spécialisé dans la gestion de l'anonymat. Le logiciel mandataire, comporte des moyens de paramétrage, mis en oeuvre par un administrateur.

De préférence, selon l'invention, le dispositif spécifique est tel que le logiciel mandataire comprend des règles. Les règles comportent des critères de sélection appartenant au groupe suivant :
- l'identifiant du utilisateur,
- le type du logiciel client,
- la requête,
- la date et l'heure,
- le contexte des requêtes précédentes au sein de la session.

Les règles comportent des actions appartenant au groupe suivant :
- choisir le fournisseur d'accès via lequel la requête est routée, notamment en choisissant un fournisseur d'accès spécifique ou en choisissant les fournisseurs d'accès selon une politique tournante paramétrable,
- ajouter, modifier et/ou supprimer des éléments caractéristiques dans les requêtes, notamment en modifiant l'identifiant du logiciel client et les témoins.

De préférence, selon l'invention, le dispositif spécifique est tel que le logiciel mandataire vérifie l'accessibilité des fournisseurs d'accès et route exclusivement les requêtes via des fournisseurs d'accès accessibles.

De préférence, selon l'invention, le dispositif spécifique est tel que, dans le cas où l'exécution du logiciel client est confinée dans un environnement virtuel, localisée dans le dispositif spécifique, la communication entre l'équipement informatique et le dispositif spécifique est réalisée au moyen d'un protocole 6 assurant exclusivement une fonction de visualisation à distance. Il résulte de la combinaison des traits techniques que les risques d'intrusion dans l'équipement informatique sont réduits.

De préférence, selon l'invention, le dispositif spécifique comprend, dans le cas de requêtes impliquant un téléchargement de données dans un environnement virtuel, des moyens de messagerie électronique pour envoyer à l'utilisateur, via une passerelle de messagerie définie par l'administrateur, un message électronique de rapatriement des données.

De préférence, selon l'invention, le dispositif spécifique est tel que, dans le cas de requêtes impliquant une impression dans un environnement virtuel, l'impression est réalisée sous la forme d'un fichier dans le dispositif spécifique. Le dispositif spécifique comprend des moyens de messagerie électronique pour envoyer à l'utilisateur, via une passerelle de messagerie définie par l'administrateur, un message électronique de rapatriement du fichier.

### Description détaillée

D'autres caractéristiques et avantages de l'invention apparaîtront à la lecture de la description de variantes de réalisation, données à titre d'exemples indicatifs et non limitatifs, et de
- la figure 1 qui représente une vue schématique d'une variante de réalisation d'un système selon l'invention,
- la figure 2 qui représente, de manière schématique, le positionnement d'un dispositif spécifique selon l'invention dans une architecture Internet d'entreprise, et les flux web correspondant au cas classique et au cas d'un utilisateur protégé par un dispositif spécifique,
- la figure 3 qui représente, de manière schématique, le fonctionnement d'un dispositif spécifique selon l'invention, en mettant en évidence les mécanismes préservant l'anonymat.

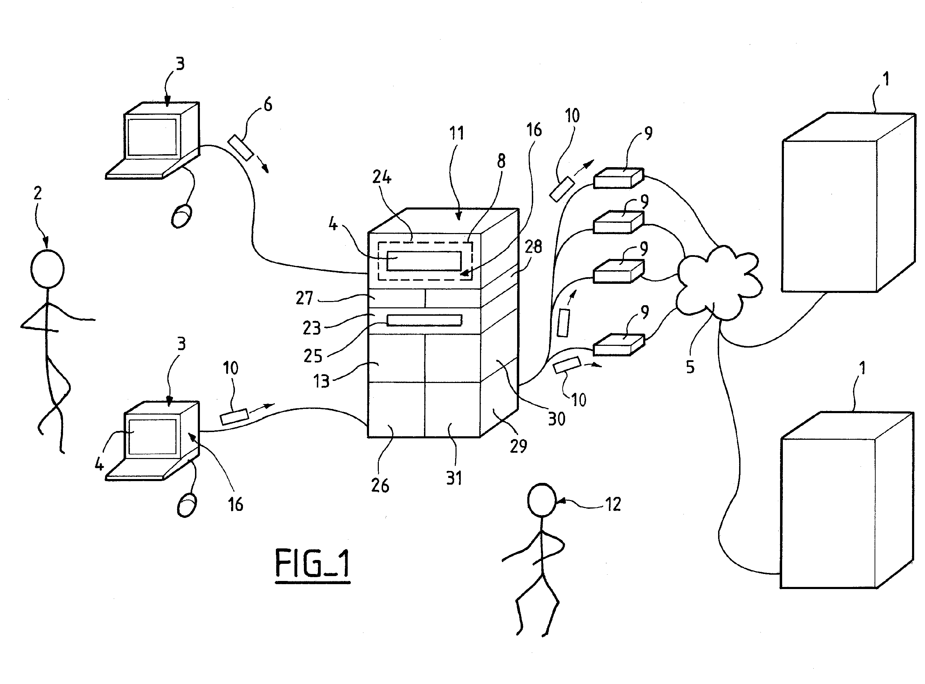

On va maintenant décrire les figures 1, 2 et 3.

Le dispositif spécifique 11 est un système d'accès à l'Internet permettant :
- de rester anonyme et discret (notamment éviter d'être dans le palmarès des visiteurs les plus actifs) lors de la consultation de sites,
- une très forte diminution du risque d'intrusion.

Le dispositif spécifique 11 peut être placé dans une zone neutre du réseau appelée "zone démilitarisée" (DMZ). La zone démilitarisé (DMZ) est délimitée et contrôlée par le garde barrière 17.

Les utilisateurs 2 sont authentifiés en début de session, avec interfaçage Radius à une base existante ou locale. Les traces de toutes les sessions sont conservées. Les requêtes se font en mode proxy web ou au travers d'un environnement virtuel 8. Dans ce cas, l'utilisateur dispose d'un système Windows ™ éphémère, le temps de sa session.

Les requêtes web se font au travers de liens multiples vers les fournisseurs d'accès 9 de type PPP, Ethernet ou PPPoE. Par un paramétrage 30 très souple, il est possible de spécifier comment les requêtes sont réparties vers les différents fournisseurs d'accès existants. Cette répartition vise à rendre plus discrètes les requêtes effectuées. Les requêtes web peuvent en outre être filtrées par le logiciel mandataire 13, afin de masquer certains révélateurs, comme le type de navigateur.

La gestion des environnements virtuels 8 permet d'ajouter les fonctions suivantes :
- Les utilisateurs peuvent surfer en utilisant Internet Explorer ™, aujourd'hui couramment utilisé pour visiter de nombreux sites, tout en maîtrisant le risque important d'intrusion lié à ce logiciel.
- La sécurité est totale grâce à un principe de "bac à sable" : Internet Explorer ™ tourne dans un environnement virtuel 8 complètement isolé et généré dynamiquement.
- L'accès au serveur se fait par le protocole 6 de visualisation à distance. Ce protocole 6 peut être, par exemple, mis en oeuvre par le logiciel libre VNC, reconnu comme particulièrement sûr. L'outil est fourni, et téléchargeable gratuitement chez ATT ^{TM}.
- A chaque session, l'environnement de l'utilisateur est entièrement recréé. A la fin de chaque session, l'environnement, potentiellement compromis, est détruit. Il n'y a donc aucun risque de persistance d'un programme hostile.
- En cas de maladresse de l'utilisateur 2 (effacement de DLL, etc), ou d'activation d'un programme hostile, une simple réouverture de session permet de remettre l'environnement d'aplomb. L'utilisateur 2 ne peut en aucun cas détériorer le système.

Les "bookmarks" (les favoris) de l'utilisateur peuvent être rendus persistants ou non, au choix de l'administrateur 12. En cas de persistance, le format des "bookmarks" (des favoris) est dûment vérifié pour éviter tout risque de persistance d'une malveillance.

Le rapatriement de données se fait par stockage local, puis par envoi d'un message électronique 18, 31.

Ceci permet de filtrer tous les fichiers téléchargés au travers d'une solution connue de filtrage de message électronique, en général très évoluée (exemple : antivirus Interscan VirusWall ™ + contrôle de contenu MailSweeper ™).

L'impression se fait par transformation en fichier PDF et envoi par message électronique, 18 31.

L'environnement virtuel renforce l'anonymat en supprimant tout risque de persistance de données entre deux sessions.

Les modes "proxy" et "environnement virtuel" 8 peuvent être utilisés simultanément.

On va maintenant décrire plus particulièrement la figure 1 qui représente une vue schématique d'une variante de réalisation d'un système selon l'invention.

Le système permet de sécuriser l'accès à un serveur 1 par un utilisateur 2 disposant d'un équipement informatique 3. Le système met en oeuvre un logiciel client 4 local et/ou distant, émettant des requêtes 10 vers le serveur 1, via un réseau de communication informatique 5 notamment du type web. Les logiciels clients 4 comportent des éléments caractéristiques et des failles de sécurité. Le système, plus particulièrement ce type de logiciel client 4, est destiné à :
- diminuer le risque d'intrusion de l'équipement informatique 3 par le serveur 1, dû aux failles de sécurité du logiciel client 4,
- protéger l'anonymat de l'utilisateur 2 et/ou de l'équipement informatique 3.

Le système selon l'invention est adapté pour traiter indépendamment ou simultanément :
- le cas où l'équipement informatique 3, dont dispose l'utilisateur 2, comporte un logiciel client 4 interactif ou non, ainsi que
- le cas où l'équipement informatique 3, dont dispose l'utilisateur 2, a accès à un logiciel client 4 déporté.

Le système comprend dans les deux cas des moyens de masquage 23 pour masquer les éléments caractéristiques du logiciel client 4. Pour masquer les éléments caractéristiques du logiciel client 4, le système comprend :
- des moyens de calcul 25 pour ajouter et/ou modifier et/ou supprimer tout ou partie des éléments caractéristiques, et/ou
- des moyens de confinement 24 pour confiner l'exécution du logiciel client 4 dans un environnement virtuel 8, et/ou
- des moyens de diffusion 26 pour diffuser les requêtes 10 en utilisant concurremment plusieurs fournisseurs d'accès 9 et en répartissant les requêtes 10 entre les fournisseurs d'accès 9.

Le système comprend, dans le cas où le logiciel client 4 est déporté, des moyens de confinement 24 pour confiner l'intégralité du logiciel client 4. Les moyens de confinement 24 permettent de confiner l'exécution du logiciel client 4 dans un environnement virtuel 8.

Selon une variante de réalisation préférentielle, le système comprend en outre :
- des moyens d'installation 27 pour créer l'environnement virtuel 8 au début de chaque session,
- des moyens de remise à zéro 28 pour détruire l'environnement virtuel 8 à la fin de chaque session,

Il en résulte que l'environnement virtuel 8 est éphémère.

De préférence, selon l'invention, le système est tel que l'environnement virtuel 8 est détruit à l'exception d'éléments prédéterminés 29 par l'utilisateur 2. Il en résulte que les éléments prédéterminés 29, notamment les requêtes 10 favorites, persistent au cours des sessions successives.

Dans le cas de la variante de réalisation représentée sur la figure 1, les moyens de confinement 24 et l'environnement virtuel 8 du logiciel client 4 sont délocalisés dans un dispositif spécifique 11 autre que l'équipement informatique 3.

Dans le cas de la variante de réalisation représentée sur la figure 1 :
- pour ajouter et/ou modifier et/ou supprimer tout ou partie des éléments caractéristiques du logiciel 4, et/ou
- pour diffuser les requêtes 10 en utilisant concurremment plusieurs fournisseurs d'accès 9 et en répartissant les requêtes 10 entre les fournisseurs d'accès 9,
le dispositif spécifique 11 comprend en outre des moyens de paramétrage 30, mis en oeuvre par un administrateur 12, pour paramétrer un logiciel mandataire 13 spécialisé dans la gestion de l'anonymat également localisé dans le dispositif spécifique 11.

Le logiciel mandataire 13 comprend des règles comportant des critères de sélection appartenant au groupe suivant :
- l'identifiant de l'utilisateur 2,
- le type du logiciel client 4,
- la requête 10,
- la date et l'heure de la session,
- le contexte des requêtes 10 précédentes au sein de la session.

Le logiciel mandataire 13 comprend des règles comportant des actions appartenant au groupe suivant :
- choisir le fournisseur d'accès 9 via lequel la requête 10 est routée, notamment en choisissant un fournisseur d'accès 9 spécifique ou en choisissant les fournisseurs d'accès 9 selon une politique tournante paramétrable,
- ajouter, modifier et/ou supprimer des éléments caractéristiques dans les requêtes 10, notamment en modifiant l'identifiant du logiciel client 4 et en supprimant les témoins 16.

Le logiciel mandataire 13 vérifie l'accessibilité des fournisseurs d'accès 9 et route exclusivement les requêtes 10 via des fournisseurs d'accès 9 accessibles.

Dans le cas où l'exécution du logiciel client 4 est confiné dans un environnement virtuel 8, localisé dans le dispositif spécifique 11, la communication entre l'équipement informatique 3 et le dispositif spécifique 11 est réalisée au moyen d'un protocole 6 assurant exclusivement une fonction de visualisation à distance. Il en résulte que les risques d'intrusion dans l'équipement informatique 3 sont réduits.

Dans le cas de requêtes 10 impliquant un téléchargement de données 17 dans un environnement virtuel 8, le dispositif spécifique 11 comprend des moyens de messagerie électronique 31 pour envoyer à l'utilisateur 2, via une passerelle de messagerie 19 définie par l'administrateur 12, un message électronique 18 de rapatriement des données.

Dans le cas de requêtes 10 impliquant une impression dans un environnement virtuel 8, l'impression est réalisée sous la forme d'un fichier dans le dispositif spécifique 11. Le dispositif spécifique 11 comprend des moyens de messagerie électronique 31 pour envoyer à l'utilisateur 2, via une passerelle de messagerie 19 définie par l'administrateur 12, un message électronique 18 de rapatriement du fichier 21.

D'autres modalités de rapatriement sont envisageables, notamment au moyen de protocoles de transfert ou de partage de fichiers de type FTP, SMB ou NFS.

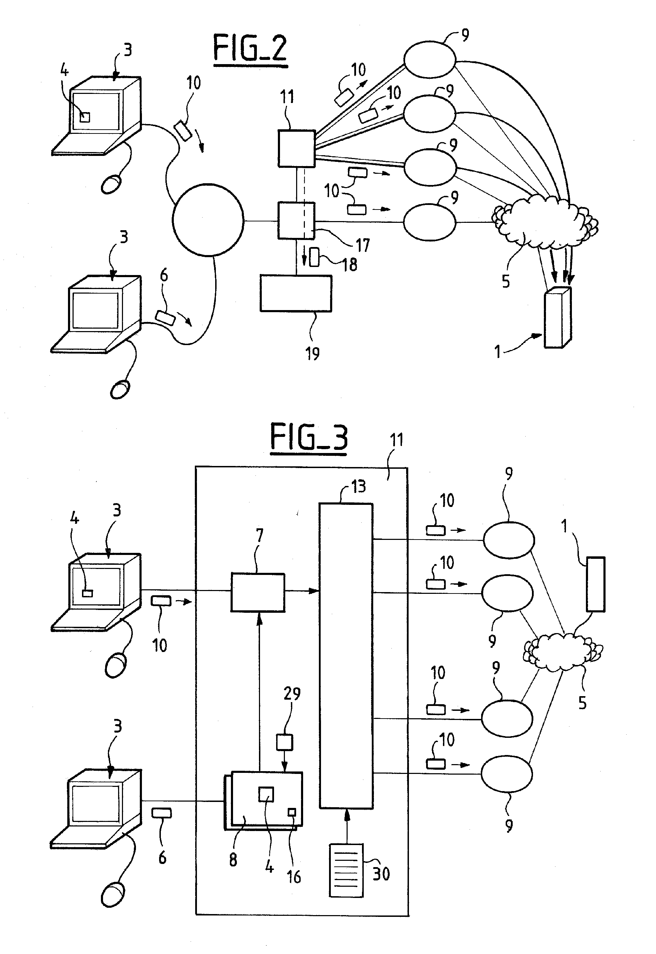

On va maintenant décrire plus particulièrement la figure 2 qui représente, de manière schématique, le positionnement d'un dispositif spécifique 11 selon l'invention dans une architecture Internet d'entreprise, et les requêtes 10 correspondant au cas classique (garde barrière 17) et au cas d'un utilisateur protégé par un dispositif spécifique 11.

On reconnaît sur la figure 2 la plupart des éléments décrits en se référant à la figure 1, ils portent les mêmes références.

On va maintenant décrire plus particulièrement la figure 3 qui représente, de manière schématique, le fonctionnement d'une variante de réalisation dispositif spécifique 11, en mettant en évidence les mécanismes préservant l'anonymat.

On reconnaît sur la figure 3 la plupart des éléments décrits en se référant aux figures 1 et 2, ils portent les mêmes références.

Le dispositif spécifique 11 peut gérer simultanément plusieurs liens internet de nature hétérogène.

Le dispositif spécifique 11 met en oeuvre des cartes RNIS intégrées, il est notamment ainsi possible de gérer jusqu'à 24 connexions de type PPP "Point to Point Protocol" simultanées vers des fournisseurs d'accès 9 distincts. Le dispositif spécifique 11 permet de spécifier un nombre plus élevé d'abonnements vers des fournisseurs d'accès Internet (FAIs) 9 parmi lesquels choisir les connexions actives. Il est ainsi possible d'assurer la redondance de la connexion et le partage de charge, en plus de compléter l'anonymat puisque, du point de vue des serveurs Webs visités 1, les requêtes semblent venir de plusieurs adresses IP correspondant à des fournisseurs 9 différents.

Le dispositif spécifique 11 comporte un proxy 13 spécialisé dans la gestion de l'anonymat, nommé logiciel mandataire.

Le logiciel mandataire 13 utilise comme paramètres de décision :
- l'adresse IP source (ou l'utilisateur 2 correspondant dans le cas d'un environnement virtuel),
- le type de navigateur autrement appelé logiciel client 4,
- l'URL,
- le type de requête 10,
- le contexte de session dans le cas d'un environnement virtuel 8 (possibilité de changer ou non à chaque lancement de l'environnement virtuel),
- la date et l'heure de la session,
- le contexte des requêtes 10 précédentes.

Le logiciel mandataire 13 peut effectuer les actions suivantes :
- router vers un lien particulier ou vers un lien variable selon une politique tournante paramétrable,
- ajouter, modifier et/ou supprimer certaines composantes des requêtes 10 (par exemple modifier le type de navigateur),
- supprimer des "cookies" (témoins) 16.

Le logiciel mandataire 13 vérifie la bonne santé de chacun des liens, et ne lance pas de requêtes 10 vers ceux qui ont un problème.

Les "cookies" (témoins) 16 sont autorisés afin de permettre une navigation effective. En effet, de nombreux sites interdisent purement et simplement la navigation sans "cookies" (témoins) 16. Mais ils sont détruits à la fin de chaque session en raison du principe d'environnement dynamique. L'environnement virtuel 8 peut également être relancé d'un simple clic par l'utilisateur 2 suspicieux..

Une périodicité de renouvellement des connexions PPP peut être fixée, afin d'obliger la renégociation d'une adresse dynamique avec le fournisseur 9.

Un serveur de cache 7 est disposé en amont du logiciel mandataire 13 pour permettre une navigation plus fluide et éviter les requêtes inutiles.

Dans le cas de la variante de réalisation représentée sur la figure 3, l'administrateur 12 peut en outre gérer une liste d'URLs interdites. Cette liste peut être mise à jour dynamiquement (par exemple en utilisant la liste gratuite SquidGuard ™). Il est également possible de faire des compléments de déclaration manuellement.

Dans le cas de la variante de réalisation représentée sur la figure 3, un antivirus a été chargé de détecter les environnements corrompus. Dès détection, l'environnement est bloqué, et une alerte est transmise à l'administrateur 12.

L'administration du dispositif spécifique 11 se fait par une connexion SSH "Secure Shell" (mode texte) ou SSL (mode graphique), ou localement sur le serveur.

Des alertes peuvent être envoyées par message électronique.

Le dispositif spécifique 11 peut être synchronisé automatiquement par NTP "Network Time Protocol".

L'authentification des utilisateurs 2 se fait soit par une base locale, soit par interrogation d'un serveur Radius ™ distant.

La sortie vers les fournisseurs d'accès (FAIs) 9 peut être soit directe, soit par chaînage sur un logiciel mandataire du fournisseur d'accès 9.

| **NOMENCLATURE** | |
|---|---|
| **Groupe nominal** | **Réf. Num.** |
| Serveur | 1 |
| Utilisateur | 2 |
| Equipement informatique | 3 |
| Logiciel client | 4 |
| Réseau de communication informatique | 5 |
| Protocole de visualisation à distance | 6 |
| Serveur de cache | 7 |
| Environnement virtuel | 8 |
| Fournisseur(s) d'accès | 9 |
| Requete (s) | 10 |
| Dispositif spécifique | 11 |
| Administrateur | 12 |
| Logiciel mandataire | 13 |
| Témoins | 16 |
| Garde barrière | 17 |
| Message électronique | 18 |
| Passerelle de messagerie | 19 |
| Moyens de masquage | 23 |
| Moyens de confinement | 24 |
| Moyens de calcul | 25 |
| Moyens de diffusion | 26 |
| Moyens d'installation | 27 |
| Moyens de remise à zéro | 28 |
| Eléments prédéterminés | 29 |
| Moyens de paramétrage | 30 |
| Moyens de messagerie électronique | 31 |

## Revendications

1. Procédé pour sécuriser l'accès à un serveur (1) par un utilisateur (2) disposant d'un équipement informatique (3), mettant en oeuvre un logiciel client (4) local et/ou distant, via un réseau de communication informatique (5) notamment du type web ; ledit logiciel client (4) comportant des éléments caractéristiques et des failles de sécurité et émettant des requêtes (10) vers le serveur (1) ;
ledit procédé étant plus particulièrement destiné à :
- diminuer le risque d'intrusion dudit équipement informatique (3) par ledit serveur (1), dû aux failles de sécurité dudit logiciel client (4),
- protéger l'anonymat de l'utilisateur (2) et/ou dudit équipement informatique (3) ;
ledit procédé comprenant l'une au moins des étapes suivantes :
- l'étape de masquer les éléments caractéristiques dudit logiciel client (4),
- l'étape de confiner l'intégralité dudit logiciel client (4).

2. Procédé selon la revendication 1 ; pour confiner ledit logiciel client (4), ledit procédé comprenant l'étape de confiner l'exécution du logiciel client (4) dans un environnement virtuel (8).

3. Procédé selon la revendication 1 ; pour masquer les éléments caractéristiques dudit logiciel client (4), ledit procédé comprenant en outre l'une au moins des étapes suivantes :
- l'étape d'ajouter et/ou de modifier et/ou de supprimer tout ou partie desdits éléments caractéristiques, et/ou
- l'étape de confiner l'exécution du logiciel client (4) dans un environnement virtuel (8), et/ou
- l'étape de diffuser lesdites requêtes (10) en utilisant concurremment plusieurs fournisseurs d'accès (9) et en répartissant lesdites requêtes (10) entre lesdits fournisseurs d'accès (9).

4. Procédé selon l'une quelconque des revendications 2 ou 3 ; ledit procédé comprenant en outre les étapes suivantes :
- l'étape de créer ledit environnement virtuel (8) au début de chaque session,
- l'étape de détruire ledit environnement virtuel (8) à la fin de chaque session,
de sorte que ledit environnement virtuel (8) est éphémère.

5. Procédé selon la revendication 4 ; ledit procédé étant tel que ledit environnement virtuel (8) est détruit à l'exception d'éléments prédéterminés par l'utilisateur (2) ;
de sorte que lesdits éléments, notamment les requêtes (10) favorites, persistent au cours des sessions successives.

6. Procédé selon l'une quelconque des revendications 4 ou 5 ; ledit procédé étant tel que le confinement dans ledit environnement virtuel (8) est délocalisé dans un dispositif spécifique (11) autre que ledit équipement informatique (3).

7. Procédé selon l'une quelconque des revendications 3 à 6 ; ledit procédé étant tel que :
- pour ajouter et/ou modifier et/ou supprimer tout ou partie desdits éléments caractéristiques, et/ou
- pour diffuser lesdites requêtes (10) en utilisant concurremment plusieurs fournisseurs d'accès (9) et en répartissant lesdites requêtes (10) entre lesdits fournisseurs d'accès (9),
ledit procédé comprend en outre, pour un administrateur (12), l'étape de paramétrer un logiciel mandataire (13) spécialisé dans la gestion de l'anonymat et localisé dans ledit dispositif spécifique (11).

8. Procédé selon la revendication 7 ; ledit procédé étant tel que ledit administrateur (12) paramètre ledit logiciel mandataire (13) au moyen de règles comportant :
- des critères de sélection appartenant au groupe suivant :
• l'identifiant dudit utilisateur (2),
• le type dudit logiciel client (4),
• la requête (10),
• la date et l'heure,
• le contexte des requêtes (10) précédentes au sein de ladite session.
- des actions appartenant au groupe suivant :
• choisir le fournisseur d'accès (9) via lequel la requête (10) est routée, notamment en choisissant un fournisseur d'accès (9) spécifique ou en choisissant les fournisseurs d'accès (9) selon une politique tournante paramétrable,
• ajouter, modifier et/ou supprimer des éléments caractéristiques dans lesdites requêtes (10), notamment en modifiant l'identifiant du logiciel client (4) et les témoins (16).

9. Procédé selon la revendication 8 ; ledit procédé étant tel que ledit logiciel mandataire (13) vérifie l'accessibilité desdits fournisseurs d'accès (9) et route exclusivement lesdites requêtes (10) via des fournisseurs d'accès (9) accessibles.

10. Procédé selon l'une quelconque des revendications 2 à 9 ; ledit procédé étant tel que, dans le cas où l'exécution dudit logiciel client (4) est confiné dans un environnement virtuel (8), localisé dans ledit dispositif spécifique (11), la communication entre ledit équipement informatique (3) et ledit dispositif spécifique (11) est réalisée au moyen d'un protocole (6) assurant exclusivement une fonction de visualisation à distance ;
de sorte que les risques d'intrusion dans ledit équipement informatique (3) sont réduits.

11. Procédé selon la revendication 10 ; ledit procédé étant tel que, dans le cas de requêtes (10) impliquant un téléchargement de données dans un environnement virtuel (8), le rapatriement desdites données est effectué par l'envoi d'un message électronique (18) entre ledit dispositif spécifique (11) et l'utilisateur (2), via une passerelle de messagerie (19) définie par ledit administrateur (12).

12. Procédé selon la revendication 10 ; ledit procédé étant tel que, dans le cas de requêtes (10) impliquant une impression dans un environnement virtuel (8), ladite impression est réalisée sous la forme d'un fichier dans le dispositif spécifique (11) ; le rapatriement du fichier étant effectué par l'envoi d'un message électronique (18) entre ledit dispositif spécifique (11) et l'utilisateur (2), via une passerelle de messagerie (19) définie par ledit administrateur (12).

13. Système pour sécuriser l'accès à un serveur (1) par un utilisateur (2) disposant d'un équipement informatique (3) ; ledit système mettant en oeuvre un logiciel client (4) local et/ou distant, via un réseau de communication informatique (5) notamment du type web ; ledit logiciel client (4) comportant des éléments caractéristiques et des failles de sécurité et émettant des requêtes (10) vers le serveur (1) ;
ledit système étant plus particulièrement destiné à :
- diminuer le risque d'intrusion dudit équipement informatique (3) par ledit serveur (1), dû aux failles de sécurité dudit logiciel client (4),
- protéger l'anonymat de l'utilisateur (2) et/ou dudit équipement informatique (3) ;
ledit système comprenant :
- des moyens de masquage (23) pour masquer les éléments caractéristiques dudit logiciel client (4),
- des moyens de confinement (24) pour confiner l'intégralité dudit logiciel client (4).

14. Système selon la revendication 13 ; ledit système étant tel que, pour confiner ledit logiciel client (4), ledit système comprend :
- des moyens de confinement (24) pour confiner l'exécution du logiciel client (4) dans un environnement virtuel (8).

15. Système selon la revendication 13 ; ledit système étant tel que, pour masquer les éléments caractéristiques dudit logiciel client (4), ledit système comprend :
- des moyens de calcul (25) pour ajouter et/ou modifier et/ou supprimer tout ou partie desdits éléments caractéristiques, et/ou
- des moyens de confinement (24) pour confiner l'exécution du logiciel client (4) dans un environnement virtuel (8), et/ou
- des moyens de diffusion (26) pour diffuser lesdites requêtes (10) en utilisant concurremment plusieurs fournisseurs d'accès (9) et en répartissant lesdites requêtes (10) entre lesdits fournisseurs d'accès (9).

16. Système selon l'une quelconque des revendications 14 ou 15 ; ledit système comprenant en outre :
- des moyens d'installation (27) pour créer ledit environnement virtuel (8) au début de chaque session,
- des moyens de remise à zéro (28) pour détruire ledit environnement virtuel (8) à la fin de chaque session,
de sorte que ledit environnement virtuel (8) est éphémère.

17. Système selon la revendication 16 ; ledit système étant tel que ledit environnement virtuel (8) est détruit à l'exception d'éléments prédéterminés (29) par l'utilisateur (2) ;
de sorte que lesdits éléments, notamment les requêtes (10) favorites, persistent au cours des sessions successives.

18. Système selon l'une quelconque des revendications 16 ou 17 ; ledit système étant tel que lesdits moyens de confinement (24) dans ledit environnement virtuel (8) sont délocalisés dans un dispositif spécifique (11) autre que ledit équipement informatique (3).

19. Système selon la revendication 18 ; ledit système étant tel que :
- pour ajouter et/ou modifier et/ou supprimer tout ou partie desdits éléments caractéristiques, et/ou
- pour diffuser lesdites requêtes (10) en utilisant concurremment plusieurs fournisseurs d'accès (9) et en répartissant lesdites requêtes (10) entre lesdits fournisseurs d'accès (9),
ledit système comprend en outre des moyens de paramétrage (30), mis en oeuvre par un administrateur (12), pour paramétrer un logiciel mandataire (13) spécialisé dans la gestion de l'anonymat et localisé dans ledit dispositif spécifique (11).

20. Système selon la revendication 19 ; ledit système étant tel que ledit logiciel mandataire (13) comprend des règles comportant :
- des critères de sélection appartenant au groupe suivant :
• l'identifiant dudit utilisateur (2),
• le type dudit logiciel client (4),
• la requête (10),
• la date et l'heure,
• le contexte des requêtes (10) précédentes au sein de ladite session.
- des actions appartenant au groupe suivant :
• choisir le fournisseur d'accès (9) via lequel la requête (10) est routée, notamment en choisissant un fournisseur d'accès (9) spécifique ou en choisissant les fournisseurs d'accès (9) selon une politique tournante paramétrable,
• ajouter, modifier et/ou supprimer des éléments caractéristiques dans lesdites requêtes (10), notamment en modifiant l'identifiant du logiciel client (4) et les témoins (16).

21. Système selon la revendication 20 ; ledit système étant tel que ledit logiciel mandataire (13) vérifie l'accessibilité desdits fournisseurs d'accès (9) et route exclusivement lesdites requêtes (10) via des fournisseurs d'accès (9) accessibles.

22. Système selon l'une quelconque des revendications 14 à 21 ; ledit système étant tel que, dans le cas où l'exécution dudit logiciel client (4) est confiné dans un environnement virtuel (8), localisé dans ledit dispositif spécifique (11), la communication entre ledit équipement informatique (3) et ledit dispositif spécifique (11) est réalisée au moyen d'un protocole (6) assurant exclusivement une fonction de visualisation à distance ;
de sorte que les risques d'intrusion dans ledit équipement informatique (3) sont réduits.

23. Système selon la revendication 22 ; ledit système étant tel que, dans le cas de requêtes (10) impliquant un téléchargement de données dans un environnement virtuel (8), ledit dispositif spécifique (11) comprend des moyens de messagerie électronique (31) pour envoyer audit utilisateur (2), via une passerelle de messagerie (19) définie par ledit administrateur (12), un message électronique (18) de rapatriement desdites données.

24. Système selon la revendication 22 ; ledit système étant tel que, dans le cas de requêtes (10) impliquant une impression dans un environnement virtuel (8), ladite impression est réalisée sous la forme d'un fichier dans le dispositif spécifique (11) ; ledit dispositif spécifique (11) comprend des moyens de messagerie électronique (31) pour envoyer audit utilisateur (2), via une passerelle de messagerie (19) définie par ledit administrateur (12), un message électronique (18) de rapatriement dudit fichier.

25. Dispositif spécifique (11) pour sécuriser l'accès à un serveur (1) par un utilisateur (2) disposant d'un équipement informatique (3) ; ledit dispositif spécifique (11) étant mis en oeuvre par un logiciel client (4) situé dans ledit dispositif spécifique (11) et/ou dans ledit équipement informatique (3), via un réseau de communication informatique (5) notamment du type web ; ledit logiciel client (4) comportant des éléments caractéristiques et des failles de sécurité et émettant des requêtes (10) vers le serveur (1) ;
ledit dispositif spécifique (11) étant plus particulièrement destiné à :
- diminuer le risque d'intrusion dudit équipement informatique (3) par ledit serveur (1), dû aux failles de sécurité dudit logiciel client (4),
- protéger l'anonymat de l'utilisateur (2) et/ou dudit équipement informatique (3) ;
ledit dispositif spécifique (11) comprenant :
- des moyens de masquage (23) pour masquer les éléments caractéristiques dudit logiciel client (4),
- des moyens de confinement (24) pour confiner l'intégralité dudit logiciel client (4).

26. Dispositif spécifique (11) selon la revendication 25 ; ledit dispositif spécifique (11) comprenant des moyens de confinement (24) pour confiner l'exécution du logiciel client (4) dans un environnement virtuel (8).

27. Dispositif spécifique (11) selon la revendication 25 ; ledit dispositif spécifique (11) comprenant, pour masquer les éléments caractéristiques dudit logiciel client (4) :
- des moyens de calcul (25) pour ajouter et/ou modifier et/ou supprimer tout ou partie desdits éléments caractéristiques, et/ou
- des moyens de confinement (24) pour confiner l'exécution du logiciel client (4) dans un environnement virtuel (8), et/ou
- des moyens de diffusion (26) pour diffuser lesdites requêtes (10) en utilisant concurremment plusieurs fournisseurs d'accès (9) et en répartissant lesdites requêtes (10) entre lesdits fournisseurs d'accès (9).

28. Dispositif spécifique (11) selon l'une quelconque des revendications 26 ou 27 ; ledit dispositif spécifique (11) comprenant en outre :
- des moyens d'installation (27) pour créer ledit environnement virtuel (8) au début de chaque session,
- des moyens de remise à zéro (28) pour détruire ledit environnement virtuel (8) à la fin de chaque session,
de sorte que ledit environnement virtuel (8) est éphémère.

29. Dispositif spécifique (11) selon la revendication 28 ; lesdits moyens de remise à zéro (28) étant tels que ledit environnement virtuel (8) est détruit à l'exception d'éléments prédéterminés (29) par l'utilisateur (2) ;
de sorte que lesdits éléments, notamment les requêtes (10) favorites, persistent au cours des sessions successives.

30. Dispositif spécifique (11) selon l'une quelconque des revendications 27 à 29 ; ledit dispositif spécifique (11) étant tel que :
- pour ajouter et/ou modifier et/ou supprimer tout ou partie desdits éléments caractéristiques, et/ou
- pour diffuser lesdites requêtes (10) en utilisant concurremment plusieurs fournisseurs d'accès (9) et en répartissant lesdites requêtes (10) entre lesdits fournisseurs d'accès (9),
ledit dispositif spécifique (11) comprend en outre un logiciel mandataire (13) spécialisé dans la gestion de l'anonymat ; ledit logiciel mandataire (13), comportant des moyens de paramétrage (30), mis en oeuvre par un administrateur (12).

31. Dispositif spécifique (11) selon la revendication 30 ; ledit dispositif spécifique (11) étant tel que ledit logiciel mandataire (13) comprend des règles comportant :
- des critères de sélection appartenant au groupe suivant :
• l'identifiant dudit utilisateur (2),
• le type dudit logiciel client (4),
• la requête (10),
• la date et l'heure,
• le contexte des requêtes (10) précédentes au sein de ladite session.
- des actions appartenant au groupe suivant :
• choisir ledit fournisseur d'accès (9) via lequel la requête (10) est routée, notamment en choisissant un fournisseur d'accès (9) spécifique ou en choisissant les fournisseurs d'accès (9) selon une politique tournante paramétrable,
• ajouter, modifier et/ou supprimer des éléments caractéristiques dans lesdites requêtes (10), notamment en modifiant l'identifiant du logiciel client (4) et les témoins (16).

32. Dispositif spécifique (11) selon la revendication 31 ; ledit dispositif spécifique (11) étant tel que ledit logiciel mandataire (13) vérifie l'accessibilité desdits fournisseurs d'accès (9) et route exclusivement lesdites requêtes (10) via des fournisseurs d'accès (9) accessibles.

33. Dispositif spécifique (11) selon l'une quelconque des revendications 26 à 32 ; ledit dispositif spécifique (11) étant tel que, dans le cas où l'exécution dudit logiciel client (4) est confinée dans un environnement virtuel (8), localisée dans ledit dispositif spécifique (11), la communication entre ledit équipement informatique (3) et ledit dispositif spécifique (11) est réalisée au moyen d'un protocole (6) assurant exclusivement une fonction de visualisation à distance ;
de sorte que les risques d'intrusion dans ledit équipement informatique (3) sont réduits.

34. Dispositif spécifique (11) selon la revendication 33 ; ledit dispositif spécifique (11) comprenant, dans le cas de requêtes (10) impliquant un téléchargement de données dans un environnement virtuel (8), des moyens de messagerie électronique (31) pour envoyer audit utilisateur (2), via une passerelle de messagerie (19) définie par ledit administrateur (12), un message électronique (18) de rapatriement desdites données.

35. Dispositif spécifique (11) selon la revendication 33 ; ledit dispositif spécifique (11) étant tel que, dans le cas de requêtes (10) impliquant une impression dans un environnement virtuel (8), ladite impression est réalisée sous la forme d'un fichier dans le dispositif spécifique (11) ; ledit dispositif spécifique (11) comprenant des moyens de messagerie électronique (31) pour envoyer audit utilisateur (2), via une passerelle de messagerie (19) définie par ledit administrateur (12), un message électronique (18) de rapatriement dudit fichier.
